# EUROPEAN PATENT APPLICATION

(11) **EP 2 608 599 A1**
(43) Date of publication of application: **26.06.2013**
(21) Application number: 12153278.2
(22) Date of filing: 31.01.2012
(51) Int. Cl.: H04W 28/06

(54) **Method of performing Internet Protocol fragmentation and related wireless network system**

(30) Priority: 20.12.2011 TW 100147449
(71) Applicant: Acer Incorporated, New Taipei City 221 (TW)
(72) Inventor: Cheng, Tsung-Yo, 221 New Taipei City (TW)
(74) Representative: Becker Kurig Straus

(57) **Abstract**

A wireless network system includes a transmitting end and a receiving end which adopt a specific communication protocol for data transmission. Before transmitting a plurality of data packets, the receiving end detects a maximum transmission unit of the specific communication protocol and generates a corresponding synchronization signal. The transmitting end adjusts its cutting rule according to the synchronization signal and segments the plurality of data packets into a plurality of sub data packets, which are then transmitted to the receiving end for packet reassembly.

## Description

### Field of the Invention

The present invention is related to a method of performing Internet Protocol (IP) fragmentation and related wireless network system according to the pre-characterizing clause of claim 1 and claim 5.

### Background of the Invention

Various network applications become increasingly more widespread with rapid development in technology. Electronic devices, including desktop computers, notebook computers, personal digital assistants (PDAs) or smart phones, may be used for accessing the Internet. In a wireless network system, various communication protocols may be adopted for data intercommunication between a transmitting end and a receiving end. To ensure the accuracy of data transmission, the maximum size of each transmitted data packet should not exceed the maximum transmission unit (MTU) of the adopted communication protocol.

### Summary of the Invention

This in mind, the present invention aims at providing a method of performing IP fragmentation in a related wireless network system without lowering the overall utilization percentage of the transmission unit.

This is achieved by a method of performing IP fragmentation in a wireless network system according to claim 1 and a wireless network system which performs IP fragmentation according to claim 5. The dependent claims pertain to corresponding further developments and improvements.

As will be seen more clearly from the detailed description following below, the claimed method of performing IP fragmentation in a wireless network system includes performing data transmission between a transmitting end and a receiving end of the wireless network using a communication protocol; before transmitting a plurality of data packets, detecting a maximum transmission unit of the communication protocol at the receiving end and transmitting a corresponding synchronization signal from the receiving end to the transmitting end; modifying a cutting rule according to the synchronization signal at the transmitting end; segmenting the plurality of data packets into a plurality of sub data packets according to the cutting rule; and transmitting the plurality of sub data packets from the transmitting end to the receiving end.

As will be seen more clearly from the detailed description following below, the claimed wireless network system which performs IP fragmentation includes a transmitting end and a receiving end. The transmitting end includes a segmenting unit configured to modify a cutting rule according to a synchronization signal and segment a plurality of data packets into a plurality of sub data packets according to the cutting rule. The receiving end includes a synchronization unit configured to detect a maximum transmission unit of a communication protocol adopted by the wireless network system and output the synchronization signal accordingly; and a reassembly unit configured to reassemble the plurality of sub data packets received from the transmitting end.

### Brief Description of the Drawings

In the following, the invention is further illustrated by way of example, taking reference to the accompanying drawings. Thereof
FIG. 1 is a function diagram of a prior art wireless network system;

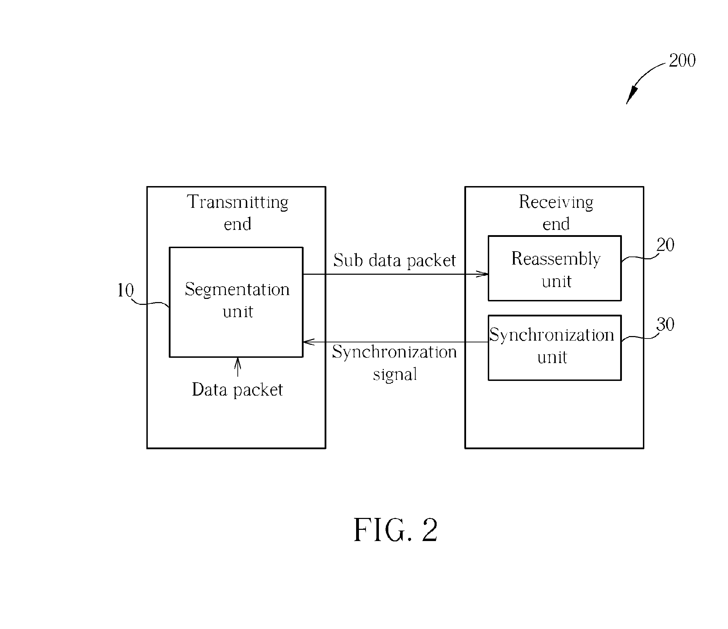

FIG. 2 is a function diagram of a wireless network system according to the present invention;
FIG. 3 and FIG. 4 are diagrams illustrating the wireless network system during data transmission using a specific communication protocol.

### Detailed Description

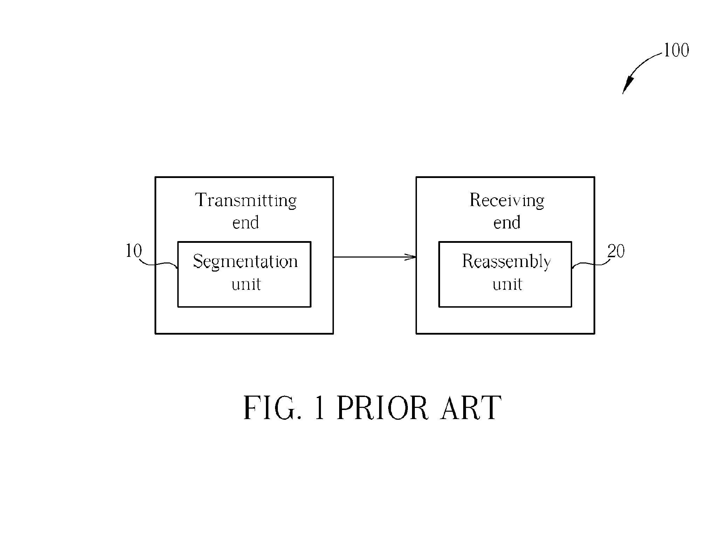

FIG. 1 is a function diagram of a prior art wireless network system 100. The transmitting end of the wireless network system 100 includes a segmentation unit 10. The receiving end of the wireless network system 100 includes a reassembly unit 20. A plurality of data packets may be transmitted between the transmitting end and the receiving end of the wireless network system 100 using a first communication protocol. If the size of a specific data packet exceeds the maximum transmission unit MTU1 of the first communication protocol, the prior art segmentation unit 10 is configured to perform IP segmentation on the specific data packet so that a plurality of sub data packets smaller than MTU1 may be provided and transmitted to the receiving end. The reassembly unit 20 is configured to reconstruct the sub data packets at the receiving end.

In the prior art, IP segmentation is performed according to a fixed cutting rule which sets a maximum size limit of the sub data packets. Since the maximum transmission unit of different communication protocols may be different, a smaller maximum size limit is normally selected in the prior art in order to ensure that the size of the sub data packets does not exceed the maximum transmission unit of all communication protocols. However, a plurality of data packets may be transmitted between the transmitting end and the receiving end of the wireless network system 100 using a second communication protocol having a maximum transmission unit MTU2. If the size of a specific data packet is larger than the maximum transmission unit MTU1 but smaller than the maximum transmission unit MTU2, no IP segmentation is required using the second communication protocol. However, the prior art segmentation unit 10 still performs unnecessary IP segmentation on the specific data packet according to the fixed cutting rule. If the size of a specific data packet is larger than the maximum transmission unit MTU2, IP segmentation only needs to be performed once using the second communication protocol. However, the prior art segmentation unit 10 still performs IP segmentation on the specific data packet according to the fixed cutting rule several times.

In the prior art, unnecessary IP fragmentation may be performed when the transmitting end and the receiving end adopt another communication protocol, thereby wasting network resources.

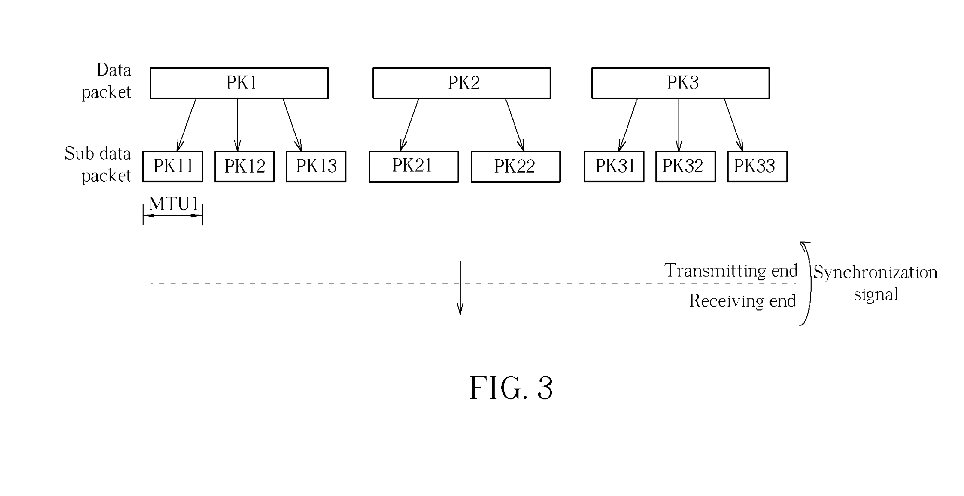

FIG. 3 is a function diagram of a wireless network system 200 according to the present invention. In an embodiment of the present invention, the wireless network system 200 may operate according to a multi-layered OSI (open system interconnection) structure. From bottom to top, Layer 1-Layer 7 sequentially include physical layer, data link layer, network layer, transport layer, session layer, presentation layer, and application layer. The wireless network system 200 includes a transmitting end and a receiving end which may be two different layers of the same user equipment (UE), two different layers of the same base station (BS), or a specific layer of a user equipment and a specific layer of a base station, respectively.

In the present invention, the transmitting end of the wireless network system 200 includes a segmentation unit 10. The receiving end of the wireless network system 200 includes a reassembly unit 20 and a synchronization unit 30. The synchronization unit 30 is configured to detect the maximum transmission unit of the specific communication protocol and output a corresponding synchronization signal to the transmitting end. The segmenting unit 10 is configured to modify a cutting rule according to the synchronization signal and segment a plurality of data packets into a plurality of sub data packets according to the cutting rule. The reassembly unit 20 is configured to reassemble the plurality of sub data packets received from the transmitting end.

In the wireless network system 200, the transmitting end and the receiving end may adopt Ethernet protocol, Token-Ring protocol, fiber distributed data interface (FDDI) protocol, transmission control protocol (TCP), or user datagram protocol (UDP). The exemplary maximum transmission unit of each communication protocol is depicted as follows:

| Communication protocol | Ethernet | Token-Ring | FDDI | TCP/UDP |
|---|---|---|---|---|
| MTU (bytes) | 1500 | 4464 | 4352 | 1492 |

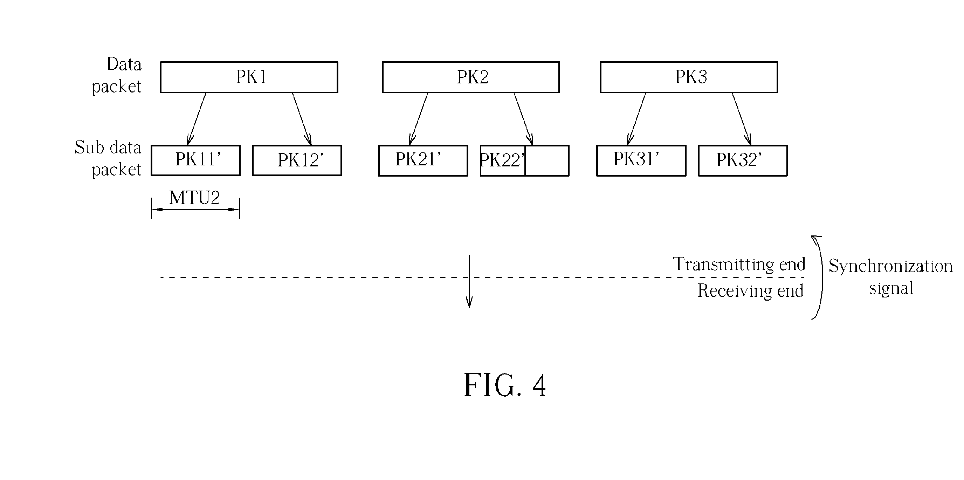

FIGs. 3 and 4 are diagrams illustrating the wireless network system 200 during data transmission using a specific communication protocol. PK1-PK3 represent data packets of varying sizes, such as application packets, protocol packets or QoS (quality of service) packets.

In the embodiment illustrated in FIG. 3, the transmitting end and the receiving end may perform data transmission using a first communication protocol having a maximum transmission unit MTU1. Before data transmission, the synchronization unit 30 is configured to detect the first communication protocol and transmit a corresponding synchronization signal associated with the maximum transmission unit MTU1 to the transmitting end so that the segmentation unit 10 may modify its cutting rule accordingly. During data transmission, since the data packets PK1-PK3 are larger than the maximum transmission unit MTU1, the segmentation unit 10 is configured to provide a plurality of sub data packets PK11-PK12, PK21-PK22 and PK31-PK33 smaller than the maximum transmission unit MTU1 by performing IP segmentation on the data packet PK1-PK3. The reassembly unit 20 may perform data reconstruction at the receiving end.

In the embodiment illustrated in FIG. 4, the transmitting end and the receiving end may perform data transmission using a second communication protocol having a maximum transmission unit MTU2 (MTU2> MTU1). Before data transmission, the synchronization unit 30 is configured to detect the second communication protocol and transmit a corresponding synchronization signal associated with the maximum transmission unit MTU2 to the transmitting end so that the segmentation unit 10 may modify its cutting rule accordingly. During data transmission, since the data packets PK1-PK3 are larger than the maximum transmission unit MTU2, the segmentation unit 10 is configured to provide a plurality of sub data packets PK11'-PK12', PK21'-PK22' and PK31'-PK32' smaller than the maximum transmission unit MTU2 by performing IP segmentation on the data packet PK1-PK3 according to the modified cutting rule. The reassembly unit 20 may perform data reconstruction at the receiving end.

When the transmitting end and the receiving end adopt the first communication protocol, the segmentation unit 10 performs IP segmentation on the data packet PK1-PK3 five times. When the transmitting end and the receiving end adopt the second communication protocol, the segmentation unit 10 performs IP segmentation on the data packet PK1-PK3 three times. In other words, the cutting rule may be dynamically modified according the maximum transmission unit of the currently adopted communication protocol. Therefore, the amount of IP segmentation may be optimized for increasing data throughput.

## Claims

1. A method of performing Internet Protocol fragmentation in a wireless network system, comprising:
performing data transmission between a transmitting end and a receiving end of the wireless network using a communication protocol;
**characterized by**
before transmitting a plurality of data packets, detecting a maximum transmission unit of the communication protocol at the receiving end and transmitting a corresponding synchronization signal from the receiving end to the transmitting end;
modifying a cutting rule according to the synchronization signal at the transmitting end;
segmenting the plurality of data packets into a plurality of sub data packets according to the cutting rule; and
transmitting the plurality of sub data packets from the transmitting end to the receiving end.

2. The method of claim 1, further **characterized by**:
reassembling the plurality of sub data packets at the receiving end.

3. The method of claim 1, further **characterized in that** a size of each sub data packet does not exceed the maximum transmission unit.

4. The method of claim 1, further **characterized in that** the plurality of sub data packets are equal in size.

5. A wireless network system (200) which performs IP fragmentation, comprising:
a transmitting end, comprising:
a segmenting unit (10) configured to modify a cutting rule according to a synchronization signal and segment a plurality of data packets into a plurality of sub data packets according to the cutting rule; and
a receiving end, comprising:
a synchronization unit (30) configured to detect a maximum transmission unit of a communication protocol adopted by the wireless network system (200) and output the synchronization signal accordingly; and
a reassembly unit (20) configured to reassemble the plurality of sub data packets received from the transmitting end.
